# EUROPEAN PATENT APPLICATION

(11) **EP 3 882 577 A1**
(43) Date of publication of application: **22.09.2021**
(21) Application number: 21158844.7
(22) Date of filing: 23.02.2021
(51) Int. Cl.: G01D 5/249, G01D 5/14, G01P 13/04

(54) **ROTATIONAL POSITION DETECTION DEVICE**

(30) Priority: 18.03.2020 JP 2020047679
(71) Applicant: AISIN SEIKI KABUSHIKI KAISHA, Kariya-shi, Aichi-ken, 448-8650 (JP)
(72) Inventor: XIE, Chuan, KARIYA-SHI, AICHI-KEN, 448-8650 (JP); MASE, Hisayasu, KARIYA-SHI, AICHI-KEN, 448-8650 (JP)
(74) Representative: Cabinet Beau de Loménie

(57) **Abstract**

A rotational position detection device includes: a rotary body (1) including first and second magnet pairs (10, 11) respectively including first and second permanent magnets (10a, 10b) and third and fourth permanent magnets (11a, 11b) which have polarities different from each other and are arranged adjacent to each other in a predetermined rotation direction (R); and a sensor pair (3) including first and second magnetic sensors (3a, 3b) adjacent to each other in the predetermined rotation direction (R) and configured to output different output signals (H, L) for detection of magnetic fields having different polarities. The rotational position detection device is configured to detect first and second facing positions where the first and second magnetic sensors (3a, 3b) respectively face the first and second permanent magnets (10a, 10b) and the third and fourth permanent magnets (11a, 11b) by a combination of the output signals (H, L).

## Description

### TECHNICAL FIELD

This disclosure relates to a rotational position detection device, and more particularly to a rotational position detection device including a magnetic sensor.

### BACKGROUND DISCUSSION

In the related art, a rotational position detection device including a magnetic sensor has been known (for example, see JP-2008-151774A (Reference 1)).

The above-described Reference 1 discloses a rotation angle detection device including a rotary member in which magnets are arranged over an entire circumference in a rotation direction, and four Hall sensors arranged around the rotary member. The rotation angle detection device can detect a rotational position of the rotary member in the entire circumference based on sensor outputs of the four Hall sensors.

However, in the rotation angle detection device described in the above-described Reference 1, there is a problem that a device configuration becomes more complicated than necessary in a case where the magnets are arranged on the entire circumference in the rotation direction of the rotary member and a relatively large amount (four) of Hall sensors are provided to detect a specific rotation position of the rotary member.

A need thus exists for a rotational position detection device capable of detecting a specific rotational position of a rotary body with a simple device configuration.

### SUMMARY

In order to achieve the above-described object, a rotational position detection device according to an aspect of this disclosure includes: a rotary body including a first magnet pair including a first permanent magnet and a second permanent magnet which have polarities different from each other and are arranged adjacent to each other in a predetermined rotation direction; and a second magnet pair which is arranged at a position different from the first magnet pair and includes a third permanent magnet and a fourth permanent magnet which have polarities different from each other and are arranged adjacent to each other in the predetermined rotation direction; and a sensor pair which includes a first magnetic sensor and a second magnetic sensor that are arranged in a manner of being adjacent to each other in the predetermined rotation direction and configured to output different output signals for detection of magnetic fields having different polarities. The rotational position detection device is configured to detect a first facing position where the first magnetic sensor and the second magnetic sensor respectively face the first permanent magnet and the second permanent magnet and a second facing position where the first magnetic sensor and the second magnetic sensor respectively face the third permanent magnet and the fourth permanent magnet by a combination of the output signals by the sensor pair which are different from each other.

As described above, in the rotational position detection device according to the aspect of this disclosure, the first facing position where the first magnetic sensor and the second magnetic sensor of the sensor pair respectively face the first permanent magnet and the second permanent magnet of the first magnet pair and the second facing position where the first magnetic sensor and the second magnetic sensor of the sensor pair respectively face the third permanent magnet and the fourth permanent magnet of the second magnet pair are configured to be detected by a combination of mutually different output signals by the sensor pair. As a result, unlike the configuration in the related art in which magnets are provided around the entire circumference of the rotary body in the rotation direction, the first facing position and the second facing position can be detected by a simple device configuration in which the first magnet pair and the second magnet pair are arranged at different positions in the rotation direction of the rotary body, and the sensor pair including less magnetic sensors (the first magnetic sensor and the second magnetic sensor) of two is provided compared with the configuration in the related art including four magnetic sensors. Therefore, a specific rotational position of the rotary body can be detected with a simple device configuration.

In the rotational position detection device according to the aspect of this disclosure, the second permanent magnet of the first magnet pair and the fourth permanent magnet of the second magnet pair which have different polarities may be arranged on one side in the predetermined rotation direction of the first permanent magnet of the first magnet pair and the third permanent magnet of the second magnet pair, respectively.

According to such a configuration, magnetic poles of the magnets facing the first magnetic sensor and the second magnetic sensor can be different at the first facing position and the second facing position. Therefore, the first facing position and the second facing position can be easily detected by a combination of mutually different output signals by the sensor pair.

The rotational position detection device according to the aspect of this disclosure may be configured to detect, in addition to the first facing position and the second facing position, unstable positions deviated from the first facing position and the second facing position in the predetermined rotation direction based on coincidence of the output signals of the first magnetic sensor and the second magnetic sensor.

According to such a configuration, the unstable position can be detected by the output signals of the first magnetic sensor and the second magnetic sensor being equal to each other, and therefore the rotational position that is not at the first facing position or the second facing position can also be detected. That is, the rotational position of the rotary body can be detected in more detail.

In the rotational position detection device according to the aspect of this disclosure, a center position of the first magnetic sensor and the second magnetic sensor may be located in the vicinity, preferably in vis-à-vis, of a center position of the first magnet pair at the first facing position in the predetermined rotation direction, and the center position of the first magnetic sensor and the second magnetic sensor may be located in the vicinity, preferably in vis-à-vis, of a center position of the second magnet pair at the second facing position in the predetermined rotation direction. The "vicinity of a center position" includes both a position of the center position itself and a position deviated from the center position and in the vicinity of the center position.

According to such a configuration, when the center position of the first magnetic sensor and the second magnetic sensor and the center position of the first magnet pair substantially coincide with each other in the predetermined rotation direction, the output signals of the first magnetic sensor and the second magnetic sensor can be made reliably different from each other. Therefore, the first facing position can be reliably detected. The same applies to the second facing position.

In the rotational position detection device according to the aspect of this disclosure, the sensor pair may be a latch type configured to hold the output signals.

According to such a configuration, since the sensor pair can hold the output signals at the time when the rotary body stops again after a stop, the sensor pair can detect the first magnet pair and the second magnet pair to be stopped at the first facing position and the second facing position by continuously outputting different output signals.

In the rotational position detection device according to the aspect of this disclosure, a rotation direction of the rotary body may be determined based on a time difference between the output signal of the first magnetic sensor and the output signal of the second magnetic sensor.

According to such a configuration, when the rotational position detection device is applied to a rotary body that is not reversely rotated, an abnormality in the rotation direction can be detected. The rotation direction can be easily determined by applying the rotational position detection device to a rotary body capable of reverse rotation.

In the rotational position detection device according to the one aspect, the following configurations are also conceivable.

(Additional Item 1) That is, in the above-described rotational position detection device according to the one aspect, the first magnet pair and the second magnet pair may be arranged at different positions that are 180 degrees different in phase with each other in the predetermined rotation direction.

According to such a configuration, the first facing position and the second facing position of the rotary body that are 180 degrees different in phase from each other can be detected with the first magnet pair 10 and the second magnet pair 11 arranged at positions 180 degrees different in phase with each other.

(Additional Item 2) In the rotational position detection device that is configured to detect the unstable position, an operation abnormality may be determined based on continuation of a state in which the rotary body has stopped at the unstable position for a predetermined time or more.

According to such a configuration, it can be detected that the stop position of the rotary body is not the first facing position or the second facing position, and therefore a user can grasp the status of the operation abnormality by means of notification and the like.

(Additional Item 3) In the rotational position detection device according to the one aspect, in the predetermined rotation direction, a pitch between the first magnetic sensor and the second magnetic sensor may be substantially equal to a pitch between the first permanent magnet and the second permanent magnet and a pitch between the third permanent magnet and the fourth permanent magnet.

According to such a configuration, the first magnetic sensor and the second magnetic sensor and the first permanent magnet and the second permanent magnet can be reliably facing each other so that detection signals of the first magnetic sensor and the second magnetic sensor are different, and therefore the first facing position can be reliably detected. The same applies to the second facing position.

(Additional Item 4) In the rotational position detection device according to the one aspect, the rotary body may be a shaft-shaped linear motion actuator that reciprocates in an extension direction of a rotation center axis while rotating in the predetermined rotation direction.

According to such a configuration, not only the rotational position of the linear motion actuator, but also the position in the extension direction of the rotation center axis of the linear motion actuator can be detected.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a schematic perspective view of a rotational position detection device according to an embodiment;
FIG. 2 shows a first facing position of a linear motion actuator of the rotational position detection device according to the embodiment;
FIG. 3 shows a second facing position of the linear motion actuator of the rotational position detection device according to the embodiment;
FIG. 4 shows a relationship between output signals of a sensor pair and a rotational position of the linear motion actuator according to the embodiment;
FIG. 5 shows a relationship between output signals of the sensor pair and time when the linear motion actuator according to the embodiment rotates in a predetermined rotation direction; and
FIG. 6 shows a relationship between output signals of the sensor pair and time when the linear motion actuator according to the embodiment rotates in a direction opposite to the predetermined rotation direction.

### DETAILED DESCRIPTION

Hereinafter, embodiments disclosed here will be described with reference to the drawings.

### <Embodiment>

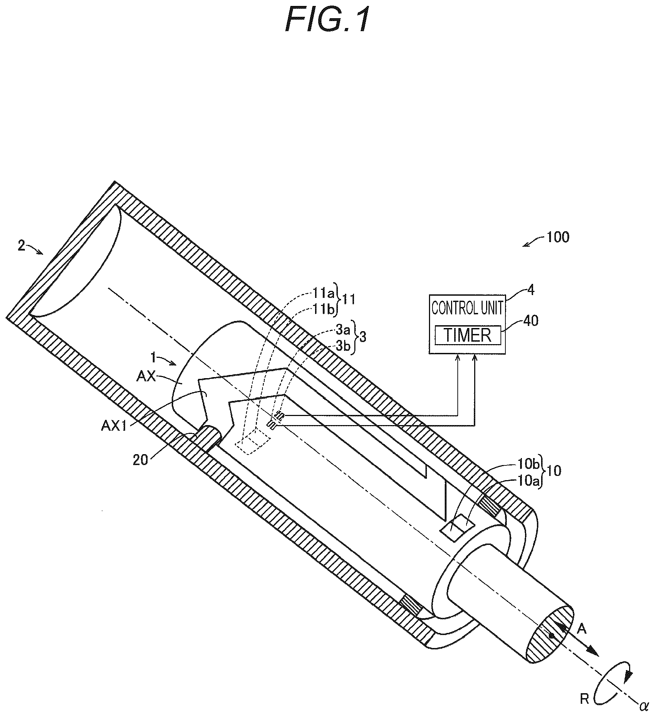

A configuration of a rotational position detection device 100 according to the embodiment will be described with reference to FIGS. 1 to 6.

### (Configuration of Rotational Position Detection Device)

As shown in FIG. 1, the rotational position detection device 100 according to the embodiment is configured to output a rotational displacement of a rotary shaft-shaped linear motion actuator 1 (an example of a "rotary body" in the claims) as a digital signal. That is, the rotational position detection device 100 is a so-called rotary encoder.

The rotational position detection device 100 includes the linear motion actuator 1 including a first magnet pair 10 and a second magnet pair 11. That is, the rotational position detection device 100 includes two (even number) magnet pairs. The first magnet pair 10 includes a first permanent magnet 10a and a second permanent magnet 10b. The second magnet pair 11 includes a third permanent magnet 11a and a fourth permanent magnet 11b.

The rotational position detection device 100 further includes a fixed case 2 that rotatably supports the linear motion actuator 1, a sensor pair 3 that is installed in the fixed case 2, and a control unit 4. The sensor pair 3 includes a first magnetic sensor 3a and a second magnetic sensor 3b.

The rotational position detection device 100 can detect a predetermined rotational position of the linear motion actuator 1 based on output signals of the first magnetic sensor 3a and the second magnetic sensor 3b while changing positions of the first magnetic sensor 3a and the second magnetic sensor 3b relative to the first magnetic pair 10 and the second magnetic pair 11 by rotating the linear motion actuator 1 in a predetermined rotation direction (R direction).

Hereinafter, a configuration of components of the rotational position detection device 100 will be described in order. In the drawings, a predetermined rotation direction of the linear motion actuator 1 is indicated by the R direction, and an extension direction of a rotation center axis α of the linear motion actuator 1 is indicated by an A direction.

### (Structure of Linear Motion Actuator Including First Magnet Pair and Second Magnet Pair)

As shown in FIG. 1, the linear motion actuator 1 is configured to reciprocate in the extension direction (A direction) of the rotation center axis α of the linear motion actuator 1 while rotating in the predetermined rotation direction (R direction). The linear motion actuator 1 includes the first magnet pair 10 and the second magnet pair 11, and a shaft-shaped linear motion shaft AX in which the first magnet pair 10 and the second magnet pair 11 are installed.

The linear motion shaft AX is generally formed in an elongated columnar shape. The linear motion shaft AX is configured to, in a state of being accommodated in the fixed case 2, rotate around the rotation center axis α extending in a longitudinal direction of the linear motion shaft AX by applying a torque from a drive source (not shown) such as an electric motor.

A concave guide groove AX1 is provided on an outer surface of the linear motion shaft AX. The guide groove AX1 is formed in an annular shape in a manner of being continuous in the predetermined rotation direction (R direction) of the linear motion shaft AX, and is formed in a meandering shape in which a position in the extension direction (A direction) of the rotation center axis α fluctuates in the predetermined rotation direction (R direction).

A convex engaging portion 20 that engages with the guide groove AX1 is provided on an inner surface of the fixed case 2. The engaging portion 20 of the fixed case 2 is configured to move relative to the guide groove AX1 along the guide groove AX1 of the linear motion shaft AX. That is, since the fixed case 2 does not actually move, the linear motion shaft AX is configured to reciprocate in the extension direction of the rotation center axis α by moving the guide groove AX1 along the engaging portion 20 of the fixed case 2 as the linear motion shaft AX itself rotates and changing the position of the engaging portion 20 in the guide groove AX1. At this time, the linear motion shaft AX rotates a cam (not shown) provided on one end side.

The guide groove AX1 is provided with two relative stop positions of the engaging portion 20. The two stop positions are arranged at positions that are 180 degrees different in phase with each other in the predetermined rotation direction (R direction) of the linear motion shaft AX.

At one of the two stop positions, a pair of the first permanent magnet 10a and the second permanent magnet 10b constituting the first magnet pair 10 are arranged at a first facing position where the pair of the first permanent magnet 10a and the second permanent magnet 10b face a pair of the first magnetic sensor 3a and the second magnetic sensors 3b constituting the sensor pair 3, respectively. At the first facing position, the position of the first magnet pair 10 in the A direction (substantially) coincides with the position of the sensor pair 3 in the A direction.

At the other one of the two stop positions, a pair of the third permanent magnet 11a and the fourth permanent magnet 11b constituting the second magnet pair 11 are arranged at a second facing position where the pair of the third permanent magnet 11a and the fourth permanent magnet 11b constituting the second magnet pair 11 face the pair of the first magnetic sensor 3a and the second magnetic sensors 3b constituting the sensor pair 3, respectively. At the second facing position, the position of the second magnet pair 11 in the A direction (substantially) coincides with the position of the sensor pair 3 in the A direction. Details of the first facing position and the second facing position will be described later.

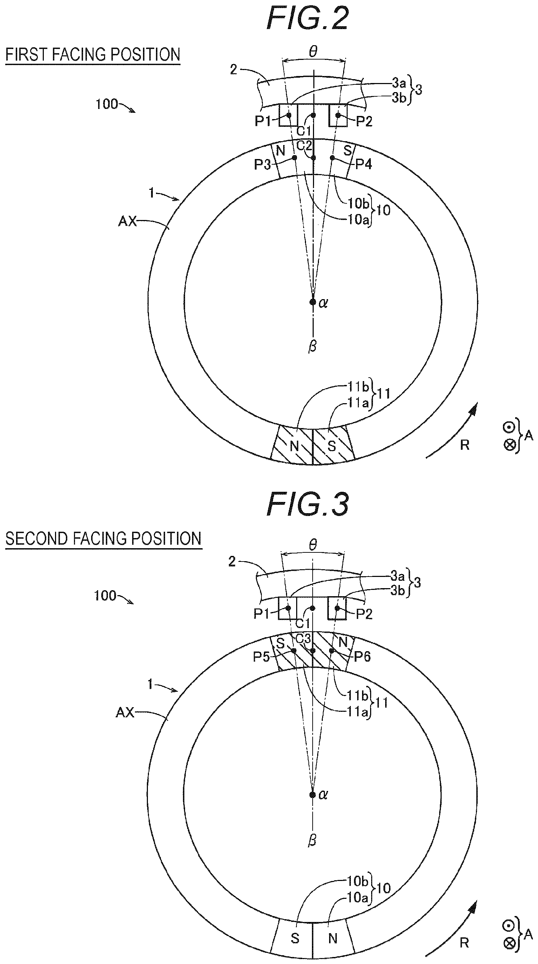

Here, in order to facilitate understanding of the principle of the rotational position detection device 100, the rotation position detection device 100 will be described with reference to FIGS. 2 to 4 in which the rotational position detection device 100 is schematically shown from the extension direction of the rotation center axis α. In FIGS. 2 to 4, the predetermined rotation direction (R direction) of the linear motion actuator 1 is shown in a counterclockwise direction.

As shown in FIGS. 2 and 3, the first magnet pair 10 has polarities different from each other, and has the first permanent magnet 10a and the second permanent magnet 10b arranged adjacent to each other in the predetermined rotation direction (R direction) of the linear motion actuator 1. The first permanent magnet 10a has an N pole and the second permanent magnet 10b has an S pole. The second permanent magnet 10b is arranged adjacent to one side (clockwise direction side of FIGS. 2 to 4) of the first permanent magnet 10a in the predetermined rotation direction (R direction). The first permanent magnet 10a and the second permanent magnet 10b are integrally formed.

The second magnet pair 11 has polarities different from each other, and has the third permanent magnet 11a and the fourth permanent magnet 11b arranged adjacent to each other in the predetermined rotation direction (R direction) of the linear motion actuator 1. The third permanent magnet 11a has an S pole, and the fourth permanent magnet 11b has an N pole. The third permanent magnet 11a is arranged adjacent to one side (clockwise direction side of FIGS. 2 to 4) of the fourth permanent magnet 11b in the predetermined rotation direction (R direction). The third permanent magnet 11a and the fourth permanent magnet 11b are integrally formed.

The first magnet pair 10 and the second magnet pair 11 are arranged at positions that are 180 degrees different in phase with each other in the predetermined rotation direction (R direction) of the linear motion actuator 1. That is, the first magnet pair 10 and the second magnet pair 11 are arranged on one side and the other side of the rotation center axis α, respectively, in a manner of sandwiching the rotation center axis α. The first magnet pair 10 and the second magnet pair 11 are arranged along a circular shaped outer surface of the linear motion actuator 1.

The first magnet pair 10 and the second magnet pair 11 are formed by embedding (fixing) magnets in the rotary linear motion shaft AX. The first magnet pair 10 and the second magnet pair 11 can also be formed by locally magnetizing the rotary linear motion shaft AX.

### (Constitution of Sensor Pair)

As shown in FIGS. 2 and 3, the sensor pair 3 is arranged in a manner of being adjacent to each other in the predetermined rotation direction (R direction), and includes the first magnetic sensor 3a and the second magnetic sensor 3b that output different output signals for detection of magnetic fields of different polarities. The second magnetic sensor 3b is arranged adjacent to one side (clockwise direction side of FIGS. 2 to 4) of the first magnetic sensor 3a in the predetermined rotation direction (R direction).

The first magnetic sensor 3a is configured to output an output signal H (High signal) when detecting a magnetic field at an N pole, and outputs an output signal L (Low signal) when detecting a magnetic field at an S pole. The first magnetic sensor 3a is a latch type Hall sensor capable of holding the output signals H and L. For example, when the first magnetic sensor 3a detects the magnetic field of the N pole and outputs the output signal H, the first magnetic sensor 3a continuously outputs the output signal H until a next magnetic field of the S pole is detected. As another example, the first magnetic sensor 3a is a vertical magnetic field detection type sensor. That is, the first magnetic sensor 3a is a sensor capable of detecting a magnetic field in a radial direction of the linear motion actuator 1.

When the above-described first magnetic sensor 3a detects the magnetic field of the N pole, positions of the first magnetic sensor 3a and the first permanent magnet 10a of the N pole or the fourth permanent magnet 11b of the N pole in the predetermined rotation direction (R direction) coincide with each other. That is, when the first magnetic sensor 3a and the first permanent magnet 10a or the fourth permanent magnet 11b face each other in the radial direction of the linear motion actuator 1, the first magnetic sensor 3a detects the magnetic field of the N pole.

When the above-described first magnetic sensor 3a detects the magnetic field of the S pole, positions of the first magnetic sensor 3a and the second permanent magnet 10b of the S pole or the third permanent magnet 11a of the S pole in the predetermined rotation direction (R direction) coincide with each other. That is, when the first magnetic sensor 3a and the second permanent magnet 10b or the third permanent magnet 11a face each other in the radial direction of the linear motion actuator 1, the first magnetic sensor 3a detects the magnetic field of the S pole.

The second magnetic sensor 3b is configured to output the output signal H when detecting a magnetic field at the N pole, and output the output signal L when detecting a magnetic field at the S pole. The second magnetic sensor 3b is a latch type Hall sensor capable of holding the output signals H and L. As an example, the second magnetic sensor 3b is a vertical magnetic field detection type sensor. That is, the second magnetic sensor 3b is a sensor capable of detecting the magnetic field in the radial direction of the linear motion actuator 1.

When the above-described second magnetic sensor 3b detects the magnetic field of the N pole, positions of the second magnetic sensor 3b and the first permanent magnet 10a of the N pole or the fourth permanent magnet 11b of the N pole in the predetermined rotation direction (R direction) coincide with each other. That is, when the second magnetic sensor 3b and the first permanent magnet 10a or the fourth permanent magnet 11b face each other in a radial direction of the linear motion actuator 1, the second magnetic sensor 3b detects the magnetic field of the N pole.

When the above-described second magnetic sensor 3b detects the magnetic field of the S pole, positions of the second magnetic sensor 3b and the second permanent magnet 10b of the S pole or the third permanent magnet 11a of the S pole in the predetermined rotation direction (R direction) coincide with each other. That is, when the second magnetic sensor 3b and the second permanent magnet 10b or the third permanent magnet 11a face each other in the radial direction of the linear motion actuator 1, the second magnetic sensor 3b detects the magnetic field of the S pole.

The rotational position detection device 100 can detect three positions of the first facing position, the second facing position, and an unstable position as predetermined rotational positions of the linear motion actuator 1 (the first permanent magnet 10a, the second permanent magnet 10b, the third permanent magnet 11a, the fourth permanent magnet 11b) relative to the first magnetic sensor 3a and the second magnetic sensor 3b.

Specifically, the rotational position detection device 100 can detect the first facing position where the first magnetic sensor 3a and the second magnetic sensor 3b face the first permanent magnet 10a of the N pole and the second permanent magnet 10b of the S pole, respectively by a combination of mutually different output signals from the sensor pair 3. At the first facing position, the first magnetic sensor 3a outputs the output signal H, and the second magnetic sensor 3b outputs the output signal L.

The rotational position detection device 100 can detect the second facing position where the first magnetic sensor 3a and the second magnetic sensor 3b face the third permanent magnet 11a of the S pole and the fourth permanent magnet 11b of the N pole, respectively, by a combination of mutually different output signals from the sensor pair 3. At the second facing position, the first magnetic sensor 3a outputs the output signal L, and the second magnetic sensor 3b outputs the output signal H.

In addition to the above-described first facing position and the second facing position, the rotational position detection device 100 can detect the unstable position deviated from the first facing position and the second facing position in the predetermined rotation direction (R direction) based on coincidence of the output signals of the first magnetic sensor 3a and the second magnetic sensor 3b. That is, the rotational position detection device 100 can detect the unstable position as a position different from the first facing position and the second facing position. At the unstable position, the first magnetic sensor 3a and the second magnetic sensor 3b output the same output signal H or output the same output signal L.

As shown in FIG. 2, in the predetermined rotation direction (R direction), a center position C1 of the first magnetic sensor 3a and the second magnetic sensor 3b is located in the vicinity of a center position C2 of the first magnet pair 10 (the first permanent magnet 10a and the second permanent magnet 10b) at the first facing position. Specifically, in the predetermined rotation direction (R direction), the center position C1 of the first magnetic sensor 3a and the second magnetic sensor 3b (substantially) coincides with the center position C2 of the first magnet pair 10 (the first permanent magnet 10a and the second permanent magnet 10b) at the first facing position.

In FIG. 2, a center position of the first magnetic sensor 3a is indicated by P1, a center position of the second magnetic sensor 3b is indicated by P2, a center position of the first permanent magnet 10a is indicated by P3, and a center position of the second permanent magnet 10b is indicated by P4. The center position C2 of the first magnet pair 10 is located on a boundary between the first permanent magnet 10a and the second permanent magnet 10b which are integrally formed.

At the first facing position, the center position C2 (boundary) of the first magnet pair 10 is arranged on a line β connecting the rotation center axis α and the center position C1 of the first magnetic sensor 3a and the second magnetic sensor 3b.

As shown in FIG. 3, in the predetermined rotation direction (R direction), the center position C1 of the first magnetic sensor 3a and the second magnetic sensor 3b is located in the vicinity of the center position C3 of the second magnet pair 11 (the third permanent magnet 11a and the fourth permanent magnet 11b) at the second facing position. Specifically, in the predetermined rotation direction (R direction), the center position C1 of the first magnetic sensor 3a and the second magnetic sensor 3b (substantially) coincides with the center position C3 of the second magnet pair 11 (the third permanent magnet 11a and the fourth permanent magnet 11b) at the second facing position.

In FIG. 3, the center position of the first magnetic sensor 3a is indicated by P1, the center position of the second magnetic sensor 3b is indicated by P2, a center position of the third permanent magnet 11a is indicated by P5, and a center position of a fourth permanent magnet 11b is indicated by P6. The center position C3 of the second magnet pair 11 is located on a boundary between the third permanent magnet 11a and the fourth permanent magnet 11b which are integrally formed.

At the second facing position, the center position C3 (boundary) of the second magnet pair 11 is arranged on the line β connecting the rotation center axis α and the center position C1 of the first magnetic sensor 3a and the second magnetic sensor 3b.

In the predetermined rotation direction (R direction), a pitch (pitch angle θ) between the first magnetic sensor 3a and the second magnetic sensor 3b is (substantially) equal to a pitch (pitch angle) between the first permanent magnet 10a and the second permanent magnet 10b and a pitch (pitch angle) between the third permanent magnet 11a and the fourth permanent magnet 11b.

### (Operation of Rotational Position Detection Device)

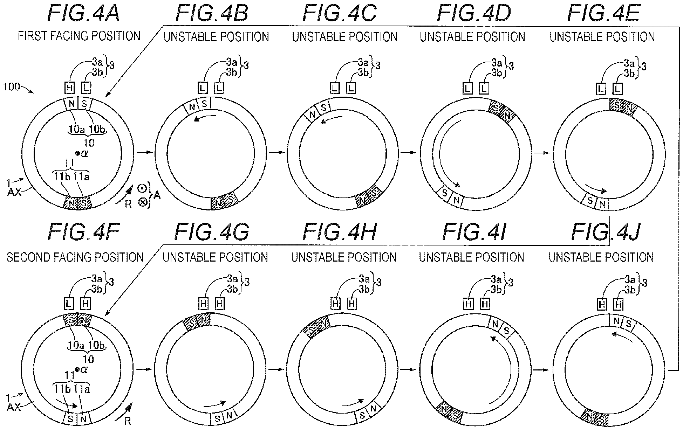

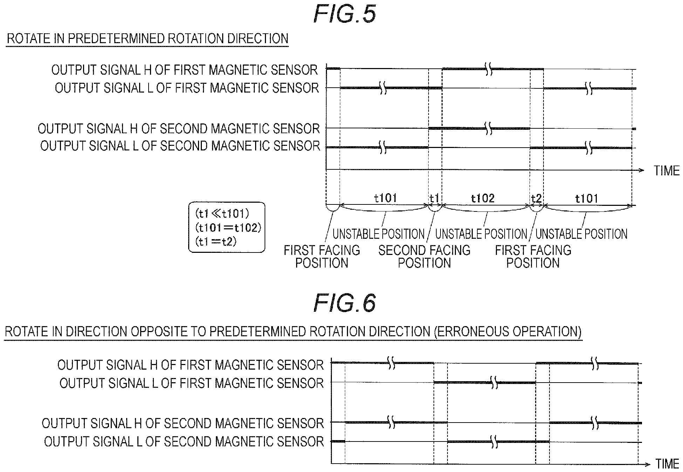

Next, the operation of the rotational position detection device 100 will be described with reference to FIGS. 4A to 4J. The linear motion actuator 1 of the rotational position detection device 100 rotates in the predetermined rotation direction (R direction). In the following description, the output signals of the first magnetic sensor 3a and the second magnetic sensor 3b will be described with reference to FIG. 5 without any particular limitation.

As shown in FIG. 4A, it is assumed that the rotational position detection device 100 starts rotation of the linear motion actuator 1 from the first facing position. At the first facing position, the first magnetic sensor 3a outputs the output signal H, and the second magnetic sensor 3b outputs the output signal L. That is, the first magnetic sensor 3a and the second magnetic sensor 3b output mutually different output signals.

When the linear motion actuator 1 rotates from the first facing position shown in FIG. 4A, the first magnet pair 10 and the second magnet pair 11 move to the position shown in FIG. 4B.

At the position where the first magnetic sensor 3a and the second permanent magnet 10b of the S pole face each other as shown in FIG. 4B, the first magnetic sensor 3a and the second magnetic sensor 3b output the same output signal L. That is, the position where the first magnetic sensor 3a and the second permanent magnet 10b of the S pole face each other is the unstable position.

Then, when the linear motion actuator 1 further rotates from the unstable position shown in FIG. 4B, the first magnet pair 10 and the second magnet pair 11 move in order to the positions shown in FIGS. 4C and 4D.

At the positions shown in FIGS. 4C and 4D, the first magnetic sensor 3a and the second magnetic sensor 3b are not continuously facing any of the first permanent magnet 10a, the second permanent magnet 10b, the third permanent magnet 11a, and the fourth permanent magnet 11b. Therefore, since the first magnetic sensor 3a and the second magnetic sensor 3b are of a latch type, the first magnetic sensor 3a and the second magnetic sensor 3b continue to output the same output signal L.

Then, when the linear motion actuator 1 further rotates from the unstable position shown in FIG. 4D, the first magnet pair 10 and the second magnet pair 11 move to the position shown in FIG. 4E.

At the position where the second magnetic sensor 3b and the third permanent magnet 11a of the S pole face each other as shown in FIG. 4E, the first magnetic sensor 3a and the second magnetic sensor 3b continue to output the same output signal L. That is, the position where the second magnetic sensor 3b and the third permanent magnet 11a of the S pole face each other is still the unstable position.

Then, when the linear motion actuator 1 further rotates from the unstable position shown in FIG. 4E, the first magnet pair 10 and the second magnet pair 11 move to the position shown in FIG. 4F.

At the position where the first magnetic sensor 3a and the second magnetic sensor 3b shown in FIG. 4F face the third permanent magnet 11a of the S pole and the fourth permanent magnet 11b of the N pole, respectively, the first magnetic sensor 3a outputs the output signal L, and the second magnetic sensor 3b outputs the output signal H. That is, the position where the first magnetic sensor 3a and the second magnetic sensor 3b face the third permanent magnet 11a of the S pole and the fourth permanent magnet 11b of the N pole, respectively, are the second facing position. At the second facing position, the first magnetic sensor 3a and the second magnetic sensor 3b output output signals with a combination opposite to that of the first facing position.

Here, duration time t1 at the second facing position at which the first magnetic sensor 3a outputs the output signal L and the second magnetic sensor 3b outputs the output signal H is fairly smaller than duration time t101 of the unstable position at which the first magnetic sensor 3a and the second magnetic sensor 3b output the same output signal L (t1 << t101).

That is, in the vicinity of the second facing position, after the second magnetic sensor 3b outputs the output signal H different from that of the first magnetic sensor 3a, the output signal of the first magnetic sensor 3a changes immediately (after fairly small time t1) to the same output signal H as that of the second magnetic sensor 3b. In a word, the change in the output signals of the second magnetic sensor 3b and the first magnetic sensor 3a is continuously generated in an order of the second magnetic sensor 3b and the first magnetic sensor 3a before and after the fairly small time t1 when the first magnet pair 10 and the second magnet pair 11 are located at the second facing position.

When the rotation direction of the linear motion actuator 1 is opposite to the predetermined rotation direction (R direction) (in a case of an erroneous operation), changes in the output signals of the first magnetic sensor 3a and the second magnetic sensor 3b in the vicinity of the second facing position occur continuously in an opposite order (continuously generated in an order of the first magnetic sensor 3a and the second magnetic sensor 3b) (see FIG. 6).

Then, when the linear motion actuator 1 further rotates from the second facing position shown in FIG. 4F, the first magnet pair 10 and the second magnet pair 11 move to the position shown in FIG. 4G.

At the position where the first magnetic sensor 3a and the fourth permanent magnet 11b of the N pole face each other as shown in FIG. 4G, the first magnetic sensor 3a and the second magnetic sensor 3b output the same output signal H. That is, the position where the first magnetic sensor 3a and the fourth permanent magnet 11b of the N pole facing each other is the unstable position.

Then, when the linear motion actuator 1 further rotates from the unstable position shown in FIG. 4G, the first magnet pair 10 and the second magnet pair 11 move in order to the positions shown in FIGS. 4H and 4I.

At the positions shown in FIGS. 4H and 4I, the first magnetic sensor 3a and the second magnetic sensor 3b are not continuously facing any of the first permanent magnet 10a, the second permanent magnet 10b, the third permanent magnet 11a, and the fourth permanent magnet 11b. Therefore, since the first magnetic sensor 3a and the second magnetic sensor 3b are of a latch type, the first magnetic sensor 3a and the second magnetic sensor 3b continue outputting the same output signal H.

Duration time t102 of the unstable position at which the first magnetic sensor 3a and the second magnetic sensor 3b output the same output signal H is substantially the same as the duration time t101 of the unstable position at which the first magnetic sensor 3a and the second magnetic sensor 3b output the same output signal L (t101 = t102).

Then, when the linear motion actuator 1 further rotates from the unstable position shown in FIG. 4I, the first magnet pair 10 and the second magnet pair 11 move to the position shown in FIG. 4J.

At the position where the second magnetic sensor 3b and the first permanent magnet 10a of the N pole face each other as shown in FIG. 4J, the first magnetic sensor 3a and the second magnetic sensor 3b continues outputting the same output signal H. That is, the position where the second magnetic sensor 3b and the first permanent magnet 10a of the N pole facing each other is still the unstable position.

Then, when the linear motion actuator 1 further rotates from the unstable position shown in FIG. 4J, the first magnet pair 10 and the second magnet pair 11 move to the first facing position shown in FIG. 4A.

Here, the duration time t2 at the first facing position when the first magnetic sensor 3a outputs the output signal H and the second magnetic sensor 3b outputs the output signal L is (substantially) the same as the duration time t1 at the second facing position where the first magnetic sensor 3a outputs the output signal L and the second magnetic sensor 3b outputs the output signal H (t1 = t2). Therefore, the duration time t2 is fairly smaller than duration time t101 of the unstable position at which the first magnetic sensor 3a and the second magnetic sensor 3b output the same output signal L (t2 << t101).

That is, in the vicinity of the first facing position, after the second magnetic sensor 3b outputs the output signal L different from that of the first magnetic sensor 3a, the output signal of the first magnetic sensor 3a changes immediately (after fairly small time t2) to the same output signal L as that of the second magnetic sensor 3b. In a word, similar to the above-described case of the second facing position, the change in the output signals of the second magnetic sensor 3b and the first magnetic sensor 3a is continuously generated in an order of the second magnetic sensor 3b and the first magnetic sensor 3a before and after the fairly small time t2 when the first magnet pair 10 and the second magnet pair 11 are located at the first facing position.

When the rotation direction of the linear motion actuator 1 is opposite to the predetermined rotation direction (R direction) (in the case of the erroneous operation), changes in the output signals of the first magnetic sensor 3a and the second magnetic sensor 3b in the vicinity of the first facing position occur continuously in the opposite order (continuously generated in the order of the first magnetic sensor 3a and the second magnetic sensor 3b) (see FIG. 6).

The rotational position detection device 100 is configured in a manner that the first magnetic sensor 3a and the second magnetic sensor 3b output the output signal H at the unstable position on one side of the first facing position in the predetermined rotation direction (R direction), and the first magnetic sensor 3a and the second magnetic sensor 3b output the output signal H at the unstable position on the other side of the first facing position. Therefore, the rotational position detection device 100 can detect the unstable positions by distinguishing them into two.

### (Configuration of Control Unit)

### <Determination of Stop Position by Control Unit>

When the output signals of the first magnetic sensor 3a and the second magnetic sensor 3b do not change continuously, the control unit 4 shown in FIG. 1 determines that the linear motion actuator 1 is stopped, and determines whether the stop position is the first facing position, the second facing position, or the unstable position. The control unit 4 includes a timer 40 that measures time in order to determine that the output signals of the first magnetic sensor 3a and the second magnetic sensor 3b do not change continuously.

Specifically, the control unit 4 is configured to determine that the stop position is the first facing position when the state in which the first magnetic sensor 3a outputs the output signal H and the second magnetic sensor 3b outputs the output signal L continues for a predetermined time or more. The "predetermined time" for the control unit 4 to determine the first facing position is at least a time longer than the above-described duration times t1 and t2 (see FIG. 5).

The control unit 4 is configured to determine that the stop position is the second facing position when the state in which the first magnetic sensor 3a outputs the output signal L and the second magnetic sensor 3b outputs the output signal H continues for a predetermined time or more. The "predetermined time" for the control unit 4 to determine the second facing position is at least a time longer than the above-described duration times t1 and t2 (see FIG. 5).

The control unit 4 is configured to determine that the stop position is the unstable position on the one side of the first facing position when the state in which the first magnetic sensor 3a and the second magnetic sensor 3b output the same output signal L continues for a predetermined time or more. The control unit 4 is configured to determine that the stop position is the unstable position on the other side of the first facing position when the state in which the first magnetic sensor 3a and the second magnetic sensor 3b output the same output signal H continues for the predetermined time or more. The "predetermined time" for the control unit 4 to determine the unstable position is at least a time longer than the above-described duration times t101 and t102 (see FIG. 5). The control unit 4 is configured to determine an operation abnormality based on continuation of the state in which the vehicle has stopped at the unstable position for a predetermined time or more.

In this case, the control unit 4 may be configured to perform predetermined control for the user to grasp the abnormality of the stop position by means of, for example, notification or recording a log.

### <Determination of Rotation Direction by Control Unit>

The control unit 4 shown in FIG. 1 is configured to determine the rotation direction of the linear motion actuator 1 based on the time difference between the output signal of the first magnetic sensor 3a and the output signal of the second magnetic sensor 3b.

Specifically, when the linear motion actuator 1 rotates in the predetermined rotation direction (R direction), as described above, the change in the output signals of the second magnetic sensor 3b and the first magnetic sensor 3a is continuously generated in an order of the second magnetic sensor 3b and the first magnetic sensor 3a before and after the fairly small time t1 when the first magnet pair 10 and the second magnet pair 11 are located at the second facing position (see FIG. 5). When the linear motion actuator 1 rotates in the predetermined rotation direction (R direction), in the case of being located at the first facing position as well, in the same order, the change in the output signals of the second magnetic sensor 3b and the first magnetic sensor 3a is continuously generated before and after the fairly small time t2 when the first magnet pair 10 and the second magnet pair 11 are located at the first facing position (see FIG. 5).

Therefore, when the output signals continuously change in the order of the second magnetic sensor 3b and the first magnetic sensor 3a before and after the fairly small time t1 or t2, the control unit 4 determines that the rotation direction of the linear motion actuator 1 is the predetermined rotation direction (R direction) (see FIG. 5).

On the other hand, when the output signals continuously change in the order of the first magnetic sensor 3a and the second magnetic sensor 3b before and after the fairly small time t1 or t2, the control unit 4 determines that the rotation direction of the linear motion actuator 1 is opposite to the predetermined rotation direction (R direction) (determining the erroneous operation) (see FIG. 6).

In this case, the control unit 4 may perform predetermined control for the user to grasp the abnormality of the rotation direction by means of, for example, notification or recording a log.

### <Determination of Failure in one of First Magnetic Sensor and Second Magnetic Sensor by Control Unit>

The control unit 4 shown in FIG. 1 is configured to determine a failure in one of the first magnetic sensor 3a and the second magnetic sensor 3b when the output signal of one of the first magnetic sensor 3a and the second magnetic sensor 3b changes and the other output signal of the first magnetic sensor 3a and the second magnetic sensor 3b does not change within a predetermined time. In addition, the control unit 4 can determine a possibility of a failure in the first magnetic sensor 3a or the second magnetic sensor 3b even when the change in the output signal of the first magnetic sensor 3a or the second magnetic sensor 3b occurs continuously.

In this case, the control unit 4 may perform predetermined control for the user to grasp a possibility of a sensor failure by means of, for example, notification or recording a log.

### (Effect of Embodiment)

According to the present embodiment, the following effects can be obtained.

In the present embodiment as described above, the first facing position where the first magnetic sensor 3a and the second magnetic sensor 3b of the sensor pair 3 respectively face the first permanent magnet 10a and the second permanent magnet 10b of the first magnet pair 10 and the second facing position where the first magnetic sensor 3a and the second magnetic sensor 3b of the sensor pair 3 respectively face the third permanent magnet 11a and the fourth permanent magnet 11b of the second magnet pair 11 can be detected by a combination of mutually different output signals by the sensor pair 3. As a result, unlike the configuration in the related art in which magnets are provided around the entire circumference of the linear motion actuator 1 in the rotation direction, the first facing position and the second facing position can be detected by a simple device configuration in which the first magnet pair 10 and the second magnet pair 11 are arranged at different positions in the rotation direction of the linear motion actuator 1 and the sensor pair 3 including less magnetic sensors (the first magnetic sensor 3a and the second magnetic sensor 3b) of two is provided compared with the configuration in the related art including four magnetic sensors. Therefore, a specific rotational position of the linear motion actuator 1 can be detected with a simple device configuration.

In the present embodiment as described above, the second permanent magnet 10b of the first magnet pair 10 and the fourth permanent magnet 11b of the second magnet pair 11 which have different polarities are arranged on one side in the predetermined rotation direction of the first permanent magnet 10a of the first magnet pair 10 and the third permanent magnet 11a of the second magnet pair 11. As a result, magnetic poles of the magnets facing the first magnetic sensor 3a and the second magnetic sensor 3b can be different at the first facing position and the second facing position. Therefore, the first facing position and the second facing position can be easily detected by a combination of mutually different output signals by the sensor pair 3.

In the present embodiment as described above, in addition to the first facing position and the second facing position, the rotational position detection device is configured to detect an unstable position deviated from the first facing position and the second facing position in the predetermined rotation direction based on coincidence of the output signals of the first magnetic sensor 3a and the second magnetic sensor 3b. As a result, the unstable position can be detected by the output signals of the first magnetic sensor 3a and the second magnetic sensor 3b being equal to each other, and therefore the rotational position that is not at the first facing position or the second facing position can also be detected. That is, the rotational position of the linear motion actuator 1 can be detected in more detail.

In the present embodiment as described above, the center position of the first magnetic sensor 3a and the second magnetic sensor 3b is located in the vicinity of the center position of the first magnet pair 10 at the first facing position in the predetermined rotation direction, and the center position of the first magnetic sensor 3a and the second magnetic sensor 3b is located in the vicinity of the center position of the second magnet pair 11 at the second facing position in the predetermined rotation direction. The "vicinity of a center position" includes both a position of the center position itself and a position deviated from the center position and in the vicinity of the center position. As a result, when the center position of the first magnetic sensor 3a and the second magnetic sensor 3b and the center position of the first magnet pair 10 substantially coincide with each other in the predetermined rotation direction, the output signals of the first magnetic sensor 3a and the second magnetic sensor 3b can be made reliably different from each other. Therefore, the first facing position can be reliably detected. The same applies to the second facing position.

In the present embodiment as described above, the sensor pair 3 is a latch type configured to hold an output signal. As a result, since the sensor pair 3 can hold the output signal at the time when the linear motion actuator 1 stops again after a stop, the sensor pair 3 can detect the first magnet pair 10 and the second magnet pair 11 to be stopped at the first facing position and the second facing position by continuously outputting different output signals.

In the present embodiment as described above, the rotation direction is determined based on the time difference between the output signal of the first magnetic sensor 3a and the output signal of the second magnetic sensor 3b. As a result, when the rotational position detection device 100 is applied to the linear motion actuator 1 that is not reversely rotated, an abnormality in the rotation direction can be detected. The rotation direction can be easily determined by applying the rotational position detection device 100 to the linear motion actuator 1 capable of reverse rotation.

In the present embodiment as described above, the first magnet pair 10 and the second magnet pair 11 are arranged at different positions that are 180 degrees different in phase with each other in the predetermined rotation direction. As a result, the first facing position and the second facing position of the linear motion actuator 1 that are 180 degrees different in phase from each other can be detected with the first magnet pair 10 and the second magnet pair 11 arranged at positions 180 degrees different in phase with each other.

In the present embodiment as described above, an operation abnormality is determined based on continuation of the state in which the vehicle has stopped at the unstable position for a predetermined time or more. As a result, it can be detected that the stop position of the linear motion actuator 1 is not the first facing position or the second facing position, and therefore the user can grasp the status of the operation abnormality by means of notification and the like.

In the present embodiment as described above, in the predetermined rotation direction, the pitch between the first magnetic sensor 3a and the second magnetic sensor 3b is substantially equal to the pitch between the first permanent magnet 10a and the second permanent magnet 10b and the pitch between the third permanent magnet 11a and the fourth permanent magnet 11b. As a result, the first magnetic sensor 3a and the second magnetic sensor 3b and the first permanent magnet 10a and the second permanent magnet 10b can be reliably facing each other so that the detection signals of the first magnetic sensor 3a and the second magnetic sensor 3b are different, and therefore the first facing position can be reliably detected. The same applies to the second facing position.

In the present embodiment as described above, the shaft-shaped linear motion actuator 1 that reciprocates in the extension direction of the rotation center axis while rotating in the predetermined rotation direction is provided. As a result, not only the rotational position of the linear motion actuator 1, but also the position in the extension direction of the rotation center axis of the linear motion actuator 1 can be detected.

### [Modifications]

The embodiment disclosed this time should be considered as an example in all respects and not restrictive. The scope of the invention is shown not by the description of the above-described embodiment but by claims, and further includes all changes (modifications) within meaning and scope equivalent to the claims.

For example, in the above-described embodiment, although an example is shown in which the sensor pair are latch type sensors, the invention is not limited thereto. In the invention, the sensor pair may be sensors that are not a latch type (non-latch type sensor).

In the above-described embodiment, although an example is shown in which the number of magnet pairs provided on the rotary body is two, the invention is not limited to two. In the invention, the number of magnet pairs provided on the rotary body may be three or more. In order to prevent an arrangement of magnetic poles from being the same in two adjacent magnet pairs, it is preferable that the number of magnet pairs provided on the rotary body is an even number.

In the above-described embodiment, although an example is shown in which the rotational position detection device includes the control unit, the invention is not limited thereto. In the invention, the rotation position detection device may not include a control unit. In this case, each control described above may be performed using a control unit provided in a device different from the rotational position detection device.

In the above-described embodiment, although an example is shown in which the rotary body of the invention is a linear motion actuator, the invention is not limited thereto. In the invention, the rotary body may be another rotary device such as a motor.

In the above-described embodiment, although an example is shown in which the first magnet pair and the second magnet pair are arranged at different positions that are 180 degrees different in phase with each other in the predetermined rotation direction of the rotary body, the invention is not limited thereto. In the invention, for example, the first magnet pair and the second magnet pair may be arranged at positions where the rotary body are 90 degrees (an angle different from 180 degrees) different in phase with each other in the predetermined rotation direction of the rotary body.

In the above-described embodiment, although an example is shown in which the abnormality is determined when the rotary body rotates in the direction opposite to the predetermined rotation direction, the invention is not limited thereto. In the invention, the rotary body may be rotatable in a direction opposite to the predetermined rotation direction.

In the above-described embodiment, although an example is shown in which the first permanent magnet and the second permanent magnet are integrally configured in a manner that the first permanent magnet as the N pole and the second permanent magnet as the S pole, the invention is not limited thereto. In the invention, the first permanent magnet and the second permanent magnet may be configured in a manner of arranging apart from each other, and having magnetic poles including both N and S poles. In this case, the magnetic pole on a side of the first permanent magnet facing the sensor pair and the magnetic pole of the second permanent magnet facing the sensor pair are set to be different magnetic poles. The same applies to the third permanent magnet and the fourth permanent magnet.

## Claims

1. A rotational position detection device comprising:
a rotary body (1) including a first magnet pair (10) including a first permanent magnet (10a) and a second permanent magnet (10b) which have polarities different from each other and are arranged adjacent to each other in a predetermined rotation direction (R); and a second magnet pair (11) which is arranged at a position different from the first magnet pair (10) and includes a third permanent magnet (11a) and a fourth permanent magnet (11b) which have polarities different from each other and are arranged adjacent to each other in the predetermined rotation direction (R); and
a sensor pair (3) which includes a first magnetic sensor (3a) and a second magnetic sensor (3b) that are arranged in a manner of being adjacent to each other in the predetermined rotation direction (R) and configured to output different output signals (H, L) for detection of magnetic fields having different polarities, wherein
the rotational position detection device is configured to detect a first facing position where the first magnetic sensor (3a) and the second magnetic sensor (3b) respectively face the first permanent magnet (10a) and the second permanent magnet (10b) and a second facing position where the first magnetic sensor (3a) and the second magnetic sensor (3b) respectively face the third permanent magnet (11a) and the fourth permanent magnet (11b) by a combination of the output signals (H, L) by the sensor pair (3) which are different from each other.

2. The rotational position detection device according to claim 1, wherein
the second permanent magnet (10b) of the first magnet pair (10) and the fourth permanent magnet (11b) of the second magnet pair (11) which have different polarities are arranged on one side in the predetermined rotation direction (R) of the first permanent magnet (10a) of the first magnet pair (10) and the third permanent magnet (11a) of the second magnet pair (11), respectively.

3. The rotational position detection device according to claim 1 or 2, wherein
in addition to the first facing position and the second facing position, the rotational position detection device is configured to detect unstable positions deviated from the first facing position and the second facing position in the predetermined rotation direction (R) based on coincidence of the output signals (H, L) of the first magnetic sensor (3a) and the second magnetic sensor (3b).

4. The rotational position detection device according to any one of claims 1 to 3, wherein
in the predetermined rotation direction (R), a center position (C1) of the first magnetic sensor (3a) and the second magnetic sensor (3b) is located in the vicinity of a center position (C2) of the first magnet pair (10) at the first facing position, and
in the predetermined rotation direction (R), the center position (C1) of the first magnetic sensor (3a) and the second magnetic sensor (3b) is located in the vicinity of a center position (C3) of the second magnet pair (11) at the second facing position.

5. The rotational position detection device according to any one of claims 1 to 4, wherein
the sensor pair (3) is a latch type configured to hold the output signals (H, L).

6. The rotational position detection device according to any one of claims 1 to 5, wherein a rotation direction of the rotary body (1) is determinable based on a time difference between the output signals (H, L) of the first magnetic sensor (3a) and the output signals (H, L) of the second magnetic sensor (3b).
